# EUROPÄISCHE PATENTSCHRIFT

(11) **EP 4 401 046 B1**
(45) Veröffentlichungstag und Bekanntmachung des Hinweises auf die Patenterteilung: **31.12.2025**
(21) Anmeldenummer: 23215421.1
(22) Anmeldetag: 11.12.2023
(51) Int. Cl.: G06V 10/74, G06V 10/764, G06V 10/80, G06V 20/56, G06V 20/64, G06V 20/70, A01B 69/00, A01D 43/073, A01D 43/08, G06N 3/096, G06T 7/10, G06T 7/73

(54) **ANORDNUNG ZUR BILDBASIERTEN ERKENNUNG DER POSITION EINES LADEBEHÄLTERS**
ARRANGEMENT FOR IMAGE-BASED RECOGNITION OF THE POSITION OF A LOADING CONTAINER
DISPOSITIF DE DÉTECTION DE LA POSITION D'UN CONTENEUR DE CHARGEMENT BASÉ SUR UNE IMAGE

(30) Priorität: 11.01.2023 DE 102023100540
(43) Veröffentlichungstag der Anmeldung: 17.07.2024
(73) Patentinhaber: Deere & Company, Moline, IL 61265 (US)
(72) Erfinder: SAUER, PATRICK, 68163 Mannheim (DE); KHOT, AKSHAY, 68163 Mannheim (DE)
(74) Vertreter: Holst, Sönke

(56) Entgegenhaltungen:
- US-A1- 2021 195 840
- LEI LIU: "Trailer hopper automatic detection method for silage harvesting based improved U-Net", COMPUTERS AND ELECTRONICS IN AGRICULTURE, vol. 198, 1 July 2022 (2022-07-01), AMSTERDAM, NL, pages 107046, XP093155854, ISSN: 0168-1699, DOI: 10.1016/j.compag.2022.107046
- WEI ZHANG: "Autonomous Identification and Positioning of Trucks during Collaborative Forage Harvesting", SENSORS, vol. 21, no. 4, 7 February 2021 (2021-02-07), CH, pages 1166, XP093155601, ISSN: 1424-8220, DOI: 10.3390/s21041166

## Beschreibung

Die Erfindung betrifft eine Anordnung zur bildbasierten Erkennung der Position eines Ladebehälters, ein damit ausgestattetes Fahrzeug sowie ein entsprechendes Verfahren.

### Stand der Technik

Bei der Ernte von landwirtschaftlichen Gütern auf einem Feld mit einer Erntemaschine ist es gängige Praxis, dass neben der Erntemaschine ein Transportfahrzeug herfährt und mit geerntetem Pflanzenmaterial beladen wird. Ein Ladebehälter des Transportfahrzeugs, bei dem es sich beispielsweise um einen Schlepper mit Anhänger oder einen Lastwagen handelt, wird während der Fahrt durch eine Austrageinrichtung der Erntemaschine mit dem geernteten Gut beladen, beispielsweise bei einem Feldhäcksler durch einen Auswurfkrümmer und bei einem Mähdrescher durch ein Abtankrohr. Die Austrageinrichtung ist in der Regel um eine vertikale Achse drehbar an der Erntemaschine befestigt und zwischen einer Außerbetriebsstellung, in der sie etwa parallel zur Längsachse der Erntemaschine orientiert ist, und einer Arbeitsposition, in der sie sich quer zur Fahrtrichtung der Erntemaschine erstreckt, verschwenkbar.

Bei betriebsmäßig verstellbaren Austrageinrichtungen, wie sie üblicherweise an Feldhäckslern verwendet werden, besteht die Möglichkeit, den Winkel der Austrageinrichtung um die Hochachse zu variieren. Zusätzlich ist die Höhe des abgabeseitigen Endes der Austrageinrichtung variierbar, wie auch die Position einer Auswurfklappe, welche den Winkel definiert, unter dem das geerntete Gut abgegeben wird. Die Position der Austrageinrichtung wird im einfachsten Fall manuell durch den Fahrer der Erntemaschine gesteuert, wozu ihm Eingabeeinrichtungen in der Kabine zur Verfügung stehen, die zur Verstellung der Austrageinrichtung dienende Aktoren ansteuern. Dabei hat der Fahrer der Erntemaschine Sorge zu tragen, dass der gesamte Ladebehälter des Transportfahrzeugs hinreichend befüllt wird, was durch sukzessives Ausrichten der Austrageinrichtung auf unterschiedliche Punkte auf dem Ladebehälter hin erfolgt. Alternativ oder zusätzlich verändert der Fahrer des Transportfahrzeugs dessen Position gegenüber der Erntemaschine in Vorwärtsrichtung und ggf. in seitlicher Richtung, um nacheinander unterschiedliche Bereiche des Ladebehälters zu füllen. Diese Vorgehensweise ist auch bei Mähdreschern üblich, die in der Regel über keine oder (s. EP 2 893 797 A2) nur um die Hochachse betriebsmäßig verstellbare Austrageinrichtung verfügen.

Im Stand der Technik findet sich eine Vielzahl an Vorschlägen, den Überladevorgang zu automatisieren, sei es durch selbsttätige Kontrolle der Ausrichtung der Überladeeinrichtung gegenüber der Erntemaschine und somit der Wurfrichtung des abgegebenen Ernteguts und/oder durch Kontrolle der Position des Ladebehälters des Transportfahrzeugs gegenüber der Erntemaschine. Es wird somit mittels eines Sensors erfasst und/oder mittels eines Modells berechnet, an welcher Stelle das Erntegut auf dem Ladebehälter landet und die Ausrichtung der Überladeeinrichtung und/oder Relativposition des Ladebehälters entsprechend kontrolliert (geregelt oder gesteuert). Hierbei kann eine bestimmte Ladestrategie abgearbeitet werden, um nach und nach unterschiedliche Stellen des Ladebehälters zu befüllen. Ähnliche, zum Teil auch schon automatisierte Überladevorgänge finden auch bei landwirtschaftlichen Maschinen statt, die Material auf ein Feld ausbringen und von Zeit zu Zeit nachzufüllen sind (z.B. Düngerstreuer oder Sämaschinen), oder bei Maschinen, die beliebiges Material vom Boden aufnehmen, das abzutransportieren ist, z.B. Erdboden oder Straßenmaterial.

Bei der automatischen Überladung von beliebigen Materialien ist es wichtig, dass einer Steuereinrichtung brauchbare Informationen hinsichtlich der Lage der Kanten des Ladebehälters vorliegen, um die Überladung selbsttätig kontrollieren zu können. Im Stand der Technik verwendet man hierzu einen am Ladebehälter bzw. einem ihn ziehenden Fahrzeug angebrachten Empfänger zum Empfang von Signalen eines satellitenbasierten Positionssystems (GNSS, global Satellite Navigation System, wie GPS, Galileo etc.), vgl. beispielsweise DE 100 64 860 A1, dessen Signale an das überladende Fahrzeug übertragen werden, sodass dort anhand eines weiteren Empfängers die Relativposition ermittelt werden kann. Um den damit verbundenen Aufwand zu vermeiden, wurden weiterhin bildbasierte Systeme vorgeschlagen, die mittels einer elektrooptischen Vorrichtung, die beispielsweise als monokulare oder Stereo-Kamera mit Bildverarbeitungssystem oder als aktives, entfernungsmessendes System (Laserscanner, PMD-Kamera) ausgeführt sein kann, den Ladebehälter erfasst.

Die Erfassung der Position des Ladebehälters erfolgt üblicherweise anhand seiner Kanten, die im von der Kamera bereitgestellten Bild durch einen geeigneten Algorithmus identifiziert werden und im Falle der Verwendung einer Stereokamera in der Lage sind, die Lage der Ecken in dreidimensionalen Koordinaten auszugeben, wozu beispielsweise auf die DE 10 2007 009 666 A1, EP 2 301 318 A1, WO 2013/120062 A1 und Zhang, W.et al., Autonomous Identification and Positioning of Trucks during Collaborative Forage Harvesting, Sensors 2021, 21, 1166 verwiesen sei, wo zunächst die Kanten und darauf basierend die Ecken identifiziert werden, was in ähnlicher Weise auch in der US 2021/0195840 A1 beschrieben wird. Liu, D.et al., Grain Truck Loading Status Detection Based on Machine Vision, Proceedings of the 2019 IEEE 4th International Conference on Image, Vision and Computing (ICIVC), Xiamen, China, 5-7 July 2019; Seiten 40-44 beschreiben eine Kantendetektion des Behälters anhand eines zellularen neuralen Netzwerks (CNN, cellular neural network), welches mittels eines Algorithmus trainiert wird, der das Verhalten eines Ameisenlöwen simuliert. Zudem wird der Füllstand des Behälters berechnet, und Liu L. et al, Trailer hopper automatic detection method for silage harvesting based improved U-Net, Computer and Elektronics in Agriculture 198 (2022), Seite 107046, beschreiben ebenfalls eine Kantendetektion eines Ladebehälters und eine Erkennung der Ecken.

Auf Maschinenlernen basierende Systeme werden auch zur Erkennung des Typs eines Ladebehälters verwendet, s. EP 3 903 558 A1, WO 2022/130038 A1, WO 2022/1300039 A1, oder zur Erstellung eines Modells für das Flugverhalten des Ernteguts beim Überladen (EP 3 316 218 A1, EP 3 949714 A1).

### Aufgabe

Bei den bisherigen stereo-kamera-basierten Systemen zur Erkennung der Kanten und somit Ecken des Ladebehälters hat es sich als problematisch erwiesen, einen Algorithmus zu entwickeln, der unter den teilweise problematischen, in der Praxis auftretenden Bedingungen mit unterschiedlichen Formen, Farben und Beleuchtungssituationen zurechtkommt.

Die der Erfindung zu Grunde liegende Aufgabe wird darin gesehen, eine Anordnung zur bildbasierten Erkennung eines Ladebehälters bereitzustellen, die sich durch Robustheit, Genauigkeit und universelle Einsatzfähigkeit auszeichnet und die erwähnten Nachteile nicht oder in einem verminderten Maße aufweist.

### Lösung

Diese Aufgabe wird erfindungsgemäß durch die Lehre der Patentansprüche 1 und 4 gelöst, wobei in den weiteren Patentansprüchen Merkmale aufgeführt sind, die die Lösung in vorteilhafter Weise weiterentwickeln.

Eine Anordnung und ein Verfahren zur bildbasierten Erkennung der Position eines Ladebehälters umfassen folgende Merkmale oder entsprechender Schritte:
eine auf den Ladebehälter gerichtete oder richtbare elektrooptische Einrichtung, die konfiguriert ist, ein Bildsignal bereitzustellen, das eine Entfernungsinformation beinhaltet, und
eine elektronische Auswertungseinrichtung, die signalübertragend mit der elektrooptischen Einrichtung verbunden und konfiguriert ist, anhand des Bildsignals ein Entfernungsbild hinsichtlich der räumlichen Lage der Kanten des Ladebehälters und eine zweidimensionale Abschätzung der Position der Ecken des Ladebehälters innerhalb des Bildes zu erzeugen und anhand des Entfernungsbildes und der Abschätzung ein Positionssignal hinsichtlich der räumlichen Position der Ecken des Ladebehälters bereitzustellen.

Mit anderen Worten werden zweierlei Merkmale aus dem Bildsignal extrahiert, nämlich ein dreidimensionales Entfernungsbild, das die Lage der Kanten des Ladebehälters repräsentiert, sowie eine zweidimensionale Abschätzung der Position der Ecken des Ladebehälters. Anhand beider wird schließlich die dreidimensionale Position der Ecken bestimmt. Es werden demnach zwei unterschiedliche Analyseverfahren auf das Bildsignal angewandt, die unterschiedliche Merkmale identifizieren. Dadurch wird die Robustheit der Bildverarbeitung verbessert und die Fehleranfälligkeit vermindert.

Die elektronische Auswertungseinrichtung umfasst ein zur Erzeugung des Entfernungsbilds und/oder der Abschätzung konfiguriertes System, das anhand von Lernbildern und zugehörigen Informationen hinsichtlich der Lage des Ladebehälters trainiert ist. Das System ist konfiguriert, Lösungen mehrerer Aufgaben gleichzeitig zu erlernen. Es findet somit ein zum maschinellen Lernen konfiguriertes System, z.B. ein geeignetes neuronales Netzwerk Verwendung, das in einem ersten Schritt trainiert wird und im praktischen Einsatz sein gelerntes Wissen einsetzt. Das Training erfolgt anhand von einer hinreichend hohen Anzahl von üblichen, in der Praxis auftretenden Bildern von Ladebehältern, die dem System vorgelegt werden. Gleichzeitig werden die zugehörigen Ausgabewerte (für das dreidimensionales Entfernungsbild, das die Lage der Kanten des Ladebehälters repräsentiert, und zusätzlich dazu die zugehörige zweidimensionale Abschätzung der Position der Ecken des Ladebehälters) dem System zugeführt. Das System lernt im ersten Schritt die Zusammenhänge zwischen Bildsignalen und zugehörigen Ausgabewerten, und wendet diese Zusammenhänge im zweiten Schritt auf die im praktischen Einsatz empfangenen Bildsignale an, um die Ausgabewerte zu erzeugen.

Das System ist konfiguriert, eine semantische Segmentierung zur Erkennung eines Ladebehälters durchzuführen und die Ecken des Ladebehälters im als Ladebehälter identifizierten Teil des Bildes zu erkennen. Bei der Segmentierung wird das Bildsignal unterteilt und unterschiedlichen Objekten zugeordnet, z.B. Boden, Ladebehälter, andere Fahrzeuge, Bäume etc. Die dem Ladebehälter zugeordneten Teile des Bildes ermöglichen eine Erkennung von dessen Ecken. Dieses Vorgehen erfolgt im zweidimensionalen Raum, um die benötigte Rechenkapazität in Grenzen zu halten.

Die elektrooptische Einrichtung ist eine Stereokamera und das dreidimensionale Entfernungsbild, das die Lage der Kanten des Ladebehälters repräsentiert, ein Disparitätsbild.

Die Auswertungseinrichtung kann konfiguriert sein, das Positionssignal zur Erzeugung eines Steuersignals für einen Aktor zur selbsttätigen Kontrolle eines Überladevorgangs von Material in den Ladebehälter zu verwenden bzw. einer diese Aufgabe wahrnehmenden Steuereinrichtung zuzuführen.

Ein Fahrzeug, insbesondere eine Erntemaschine oder eine Maschine zur Befüllung einer landwirtschaftlichen Maschine mit Verbrauchsmaterial, wie Dünger oder Saatgut, kann mit Mitteln zur Aufnahme und/oder Speicherung und zur Überladung von Material in den Ladebehälter und mit einer beschriebenen Anordnung ausgestattet sein. Es wäre auch denkbar, die vorliegende Anordnung an einer (Straßen-) Baumaschine vorzusehen, die beispielsweise Straßenmaterial aufnimmt und auf einen Ladebehälter zum Abtransport überlädt.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer selbstfahrenden Erntemaschine und eines Transportfahrzeugs mit einem Ladebehälter,
- Fig. 2: eine schematische Draufsicht auf die Erntemaschine und das Transportfahrzeug, die gemeinsam auf einem Feld einen Ernte- und Überladevorgang durchführen, wobei das Erntegut auf den Ladebehälter des Transportfahrzeugs überladen wird,
- Fig. 3: eine rückwärtige Ansicht auf der Erntemaschine und das Transportfahrzeug aus Figur 2,
- Fig. 4: eine schematische Darstellung der Steuereinrichtung zur Kontrolle des Überladens des Ernteguts, und
- Fig. 5: ein Schema zum Aufbau und zur Funktionsweise der zur bildbasierten Erkennung der Position des Ladebehälters dienenden Verarbeitungsschaltung, und
- Fig. 6: ein Schema entsprechend der Figur 5 mit beispielhaften Bildern des Ladebehälters 18 während der Bearbeitung.

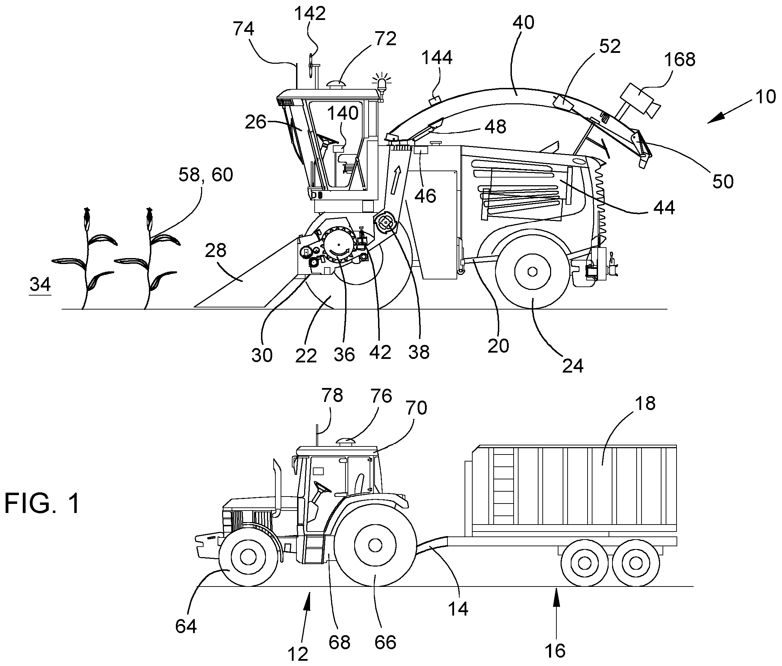

Eine in der Figur 1 dargestellte Kombination zweier landwirtschaftlicher Maschinen umfasst eine Erntemaschine 10 in der Art eines selbstfahrenden Feldhäckslers und ein Transportfahrzeug 12 in der Art eines selbstfahrenden Traktors, der mittels einer Deichsel 14 einen Anhänger 16 zieht, der einen Ladebehälter 18 umfasst.

Die Erntemaschine 10 baut sich auf einem Rahmen 20 auf, der von vorderen angetriebenen Rädern 22 und lenkbaren rückwärtigen Rädern 24 getragen wird. Die Bedienung der Erntemaschine 10 erfolgt von einer Fahrerkabine 26 aus, von der aus ein Erntevorsatz 28 in Form eines Maismähvorsatzes sichtbar ist, der an einem Einzugskanal 30 an der Frontseite der Erntemaschine 10 befestigt ist. Mittels des Erntevorsatzes 28 von einem Feld 34 aufgenommenes Erntegut wird über einen im Einzugskanal 30 angeordneten Einzugsförderer mit Vorpresswalzen einer Häckseltrommel 36 zugeführt, die es in kleine Stücke häckselt und es einem Gebläse 38 aufgibt. Zwischen der Häckseltrommel 36 und dem Gebläse 38 erstreckt sich eine Nachzerkleinerungsvorrichtung 42 mit zwei Körnerprozessorwalzen. Der Antrieb der erwähnten, antreibbaren Aggregate der Erntemaschine 10 und des Erntevorsatzes 28 erfolgt mittels eines Verbrennungsmotors 44.

Das vom Gebläse 38 abgegebene Gut verlässt die Erntemaschine 10 zu dem nebenher fahrenden Ladebehälter 18 über eine Austrageinrichtung, die einen stationären, nach oben direkt an das Gebläse 38 anschließenden Auswurfschacht und einem mittels eines ersten, fremdkraftbetätigten Aktors 46 um eine etwa vertikale Achse drehbaren und mittels eines zweiten, fremdkraftbetätigten Aktors 48 in der Neigung verstellbaren Auswurfkrümmer 40 zusammensetzt, dessen Abwurfrichtung durch eine Auswurfklappe 50 veränderbar ist, deren Neigung mittels eines dritten, fremdkraftbetätigten Aktors 52 verstellbar ist. In der Figur 1 sind der Auswurfkrümmer 40 und die Auswurfklappe 50 in ihrer Transportposition dargestellt, in die sie beispielsweise verbracht werden, wenn die Erntemaschine 10 auf einer Straße fährt. Beim Erntevorgang wird der Auswurfkrümmer 40 mittels des Aktors 48 angehoben und mittels des Aktors 46 entweder an eine Seite der Erntemaschine 10 gedreht, wenn nach dem Anmähen hinreichend Platz seitlich der Erntemaschine 10 für das Transportfahrzeug 12 auf einem abgeernteten Bereich 56 des Feldes vorhanden ist, oder der Auswurfkrümmer 40 verbleibt in der nach hinten ausgerichteten Stellung gemäß Figur 1, wenn zunächst eine Gasse in das Feld geschnitten wird, wird jedoch durch den Aktor 48 angehoben.

Das Transportfahrzeug 12 und der Anhänger 16 sind konventionellen Aufbaus. Das Transportfahrzeug 12 umfasst vordere lenkbare Räder 64 und rückwärtige angetriebene Räder 66, die an einem Rahmen 68 abgestützt sind, der eine Fahrerkabine 70 trägt.

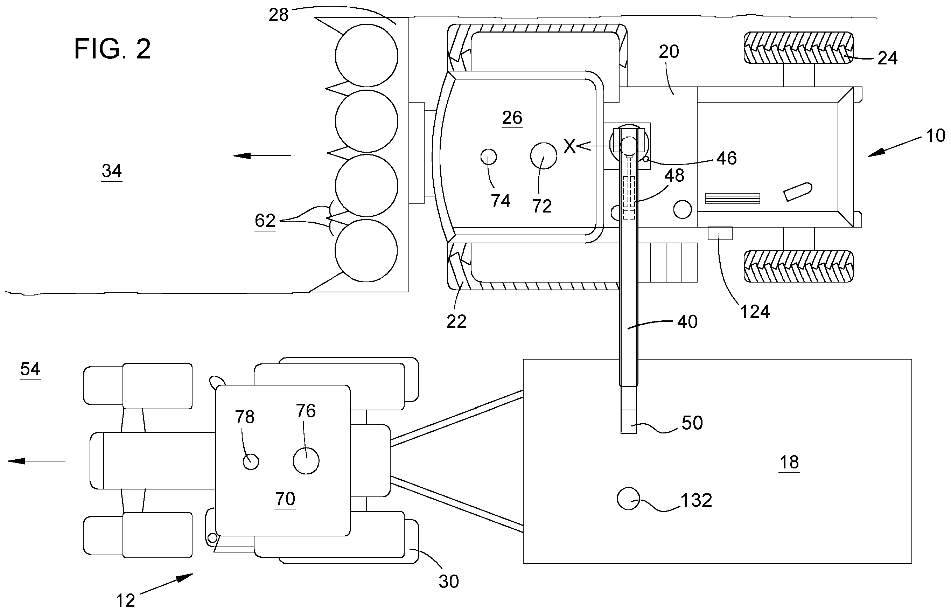

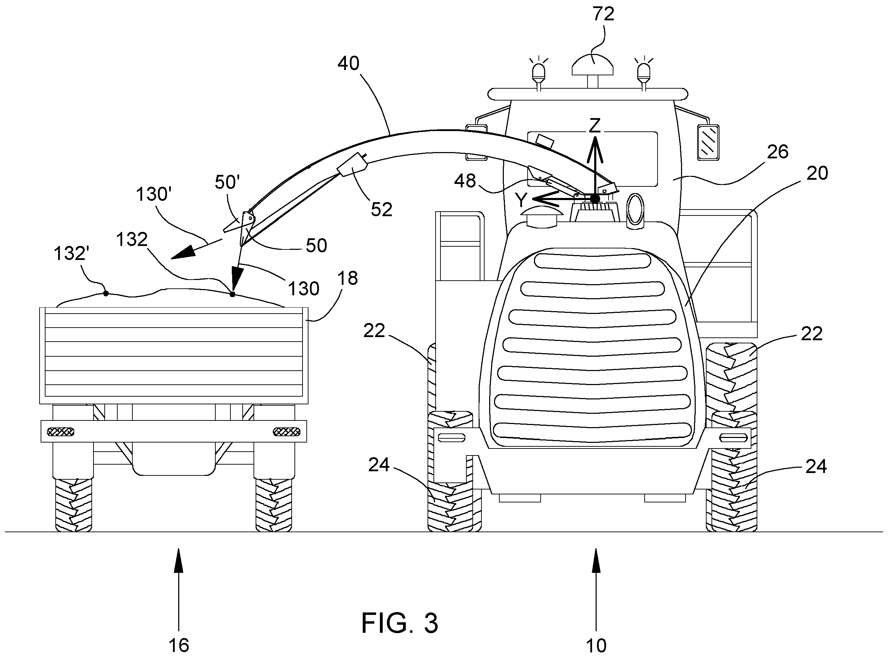

In der Figur 2 sind die Erntemaschine 10 und das Transportfahrzeug 12 in einer Draufsicht wiedergegeben. Es ist erkennbar, dass die Erntemaschine 10 entlang einer Erntegutkante fährt, die eine Grenze zwischen dem abgeernteten Bereich 54 des Felds 34 und dem noch stehenden, mit Maispflanzen 58 besetzten Bestand 60 des Felds 34 darstellt, und die die Pflanzen 58 aberntet. Das Transportfahrzeug 12 fährt auf dem abgeernteten Bereich 54 des Felds 34 parallel zur Erntemaschine 10 entlang eines Weges, auf dem die von der Erntemaschine 10 gehäckselten Pflanzen durch die Austrageinrichtung in den ersten Ladebehälter 18 gelangen. Das Transportfahrzeug 12 fährt üblicherweise parallel neben der Erntemaschine 10 her, wie in der Figur 2 gezeigt. Beim Anmähen kann das Transportfahrzeug 12 aber auch hinter der Erntemaschine 10 herfahren, da noch kein abgeernteter Teil 54 des Feldes 34 vorliegt, auf dem das Transportfahrzeug 12 fahren könnte, ohne die dort stehenden Pflanzen zu beschädigen. In der Figur 3 ist eine rückwärtige Ansicht der in Figur 2 dargestellten Situation dargestellt.

Die Erntemaschine 10 wird durch einen in der Fahrerkabine 18 sitzenden Fahrer oder durch eine an sich bekannte, selbsttätig arbeitende Lenkvorrichtung gelenkt, insbesondere anhand von Tastbügeln 62 zur Erfassung der Erntegutreihen. Das Transportfahrzeug 12 ist ebenfalls mit einer im Folgenden näher beschriebenen Lenkeinrichtung ausgestattet, um das Parallelfahren zur Erntemaschine 10 zu erleichtern bzw. automatisieren. Die Erntemaschine 10 könnte auch eine beliebige andere selbstfahrende Erntemaschine sein, wie ein Mähdrescher oder Rübenernter, bei welcher die Überladeeinrichtung in der Regel nicht betriebsmäßig verstellbar ist.

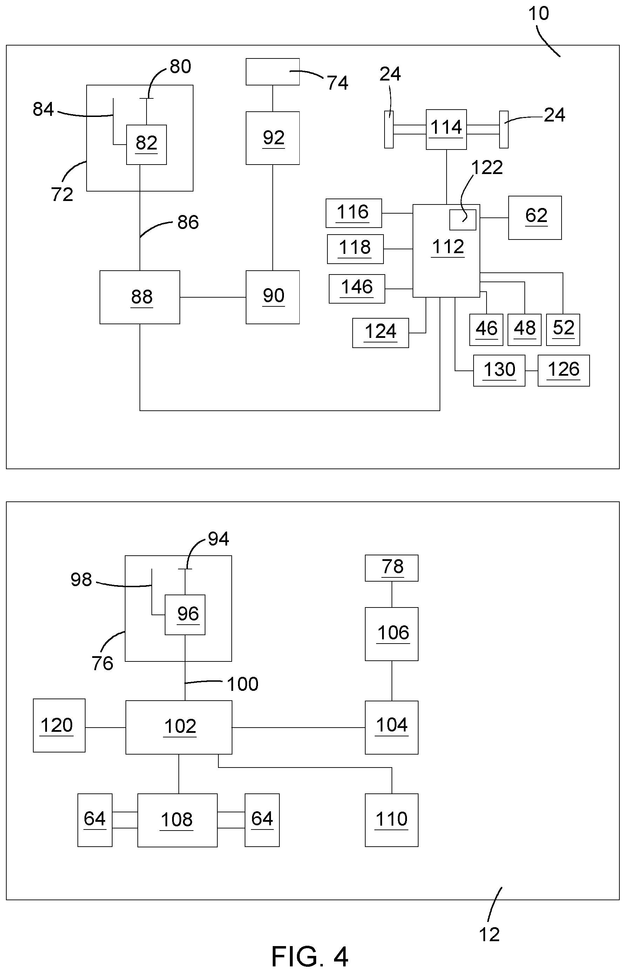

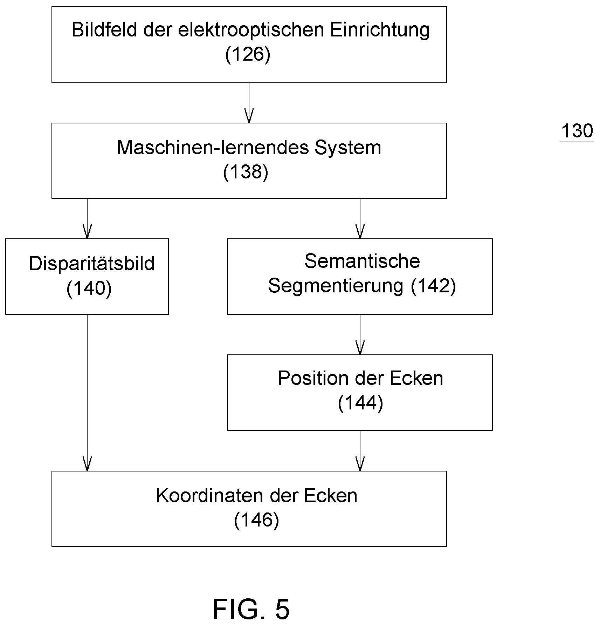

Die Erntemaschine 10 ist mit einer ersten Positionsbestimmungseinrichtung 72 zum Empfang von Signalen eines satellitenbasierten Navigationssystems (GNSS) ausgestattet, die sich auf dem Dach der Kabine 26 befindet. Dort ist auch eine erste Radioantenne 74 positioniert. Das Transportfahrzeug 12 ist mit einer zweiten Positionsbestimmungseinrichtung 76 ausgestattet, die sich auf dem Dach der Kabine 70 befindet. Dort ist auch eine zweite Radioantenne 78 positioniert. Außerdem ist die Erntemaschine 10 mit einer elektrooptischen Einrichtung 126 ausgestattet, die am äußeren Ende des Auswurfkrümmers 40 angebracht ist und zum Erfassen der Konturen des Ladebehälters 18 und ggf. ihres Füllstandes mit Erntegut dient. Die elektrooptische Einrichtung 126 kann ein ihr auf den Ladebehälter 18 gerichtetes Gesichtsfeld zweidimensional abtastender Ultraschall- oder Radar- oder Laser-Entfernungsmesser sein, oder es handelt sich um eine dreidimensional arbeitende (PMD-) Kamera, oder zwei Kameras, die ein Stereobild erzeugen, oder um eine zweidimensional arbeitende Kamera, die mit einem das Gesichtsfeld abtastenden Entfernungsmesser kombiniert ist. Das Ausgangssignal der elektrooptischen Einrichtung 126 wird durch eine Verarbeitungsschaltung 130 (vgl. Figur 4 und 5) verarbeitet, die als Anordnung zur bildbasierten Erkennung der Position eines Ladebehälters 18 gemäß der vorliegenden Erfindung dient.

Nunmehr wird auf die Figur 4 Bezug genommen, in der die einzelnen Komponenten der Anordnung zur Kontrolle des Überladens des Ernteguts von der Erntemaschine 10 auf den Ladebehälter 18 einschließlich der elektrooptischen Einrichtung 126 sowie der Positionsbestimmungseinrichtungen 72, 76 und der Lenkeinrichtung des Transportfahrzeugs 12 und der Erntemaschine 10 schematisch dargestellt sind. An Bord der Erntemaschine 10 befindet sich die erste Positionsbestimmungseinrichtung 72, die eine Antenne 80 und eine mit der Antenne 80 verbundene Auswertungsschaltung 82 umfasst. Die Antenne 80 empfängt Signale von Satelliten eines Positionsbestimmungssystems, wie GPS, Galileo oder Glonass, die der Auswertungsschaltung 82 zugeführt werden. Anhand der Signale der Satelliten bestimmt die Auswertungsschaltung 82 die aktuelle Position der Antenne 80. Die Auswertungsschaltung 82 ist weiterhin mit einer Korrekturdatenempfangsantenne 84 verbunden, die von Referenzstationen an bekannten Standorten ausgestrahlte Radiowellen empfängt. Anhand der Radiowellen werden von der Auswertungsschaltung 82 Korrekturdaten zur Verbesserung der Genauigkeit der Positionsbestimmungseinrichtung 72 erzeugt.

Die Auswertungsschaltung 82 übersendet durch eine Busleitung 86 ihre Positionsdaten an eine Rechnereinrichtung 88. Die Rechnereinrichtung 88 ist über eine Schnittstelle 90 mit einer Empfangs- und Sendeeinrichtung 92 verbunden, die wiederum mit der Radioantenne 74 verbunden ist. Die Empfangs- und Sendeeinrichtung 92 empfängt und erzeugt Radiowellen, die von der Antenne 74 aufgenommen bzw. abgestrahlt werden.

Analog befindet sich an Bord des Transportfahrzeuges 12 eine zweite Positionsbestimmungseinrichtung 76, die eine Antenne 94 und eine mit der Antenne 94 verbundene Auswertungsschaltung 96 umfasst. Die Antenne 94 empfängt Signale von Satelliten desselben Positionsbestimmungssystems wie die Antenne 80, die der Auswertungsschaltung 96 zugeführt werden. Anhand der Signale der Satelliten bestimmt die Auswertungsschaltung 96 die aktuelle Position der Antenne 94. Die Auswertungsschaltung 96 ist weiterhin mit einer Korrekturdatenempfangsantenne 98 verbunden, die von Referenzstationen an bekannten Standorten ausgestrahlte Radiowellen empfängt. Anhand der Radiowellen werden von der Auswertungsschaltung 96 Korrekturdaten zur Verbesserung der Genauigkeit der Positionsbestimmungseinrichtung 76 erzeugt.

Die Auswertungsschaltung 96 übersendet durch eine Busleitung 100 ihre Positionsdaten an eine Rechnereinrichtung 102. Die Rechnereinrichtung 102 ist über eine Schnittstelle 104 mit einer Empfangs- und Sendeeinrichtung 106 verbunden, die wiederum mit der Radioantenne 78 verbunden ist. Die Empfangs- und Sendeeinrichtung 106 empfängt und erzeugt Radiowellen, die von der Antenne 78 aufgenommen bzw. abgestrahlt werden. Durch die Empfangs- und Sendeeinrichtungen 90, 106 und die Radioantennen 74, 78 können Daten von der Rechnereinrichtung 88 an die Rechnereinrichtung 102 und umgekehrt übermittelt werden. Die Verbindung zwischen den Radioantennen 74, 78 kann direkt sein, z. B. in einem zugelassenen Funkbereich wie CB-Funk o. ä., oder über eine oder mehrere Relaisstationen bereitgestellt werden, beispielsweise wenn die Empfangs- und Sendeeinrichtungen 90, 106 und die Radioantennen 74, 78 nach dem GSM-Standard oder einem anderen geeigneten Standard für Mobiltelefone arbeiten.

Die Rechnereinrichtung 102 ist mit einer Lenkeinrichtung 108 verbunden, welche den Lenkwinkel der vorderen, lenkbaren Räder 64 steuert. Außerdem übersendet die Rechnereinrichtung 102 Geschwindigkeitssignale an eine Geschwindigkeitsvorgabeeinrichtung 110, die über eine Variation der Motordrehzahl des Transportfahrzeugs 12 und/oder der Getriebeübersetzung die Geschwindigkeit des Transportfahrzeugs 12 kontrolliert. Außerdem ist die Rechnereinrichtung 102 mit einem permanenten Speicher 120 verbunden.

An Bord der Erntemaschine 10 ist die Rechnereinrichtung 88 mit einer Steuereinrichtung 112 verbunden. Die Steuereinrichtung 112 ist mit einer Lenkeinrichtung 114 verbunden, welche den Lenkwinkel der rückwärtigen, lenkbaren Räder 24 steuert. Außerdem übersendet die Steuereinrichtung 112 Geschwindigkeitssignale an eine Geschwindigkeitsvorgabeeinrichtung 116, die über eine Variation der Getriebeübersetzung die Geschwindigkeit des Transportfahrzeugs 12 kontrolliert. Die Steuereinrichtung 112 ist weiterhin mit einem Durchsatzsensor 118, der den Abstand zwischen den Vorpresswalzen im Einzugskanal erfasst, mit einem Sensor zur Erfassung der Position von an einer Teilerspitze des Erntevorsatzes 28 angebrachten Tastbügeln 62, einem permanenten Speicher 122, der Verarbeitungsschaltung 130 und mit den Aktoren 46, 48 und 50 verbunden.

Im Erntebetrieb wird die Erntemaschine 10 entlang der Erntegutkante gelenkt, indem die Steuereinrichtung 112 Lenksignale an die Lenkeinrichtung 114 gibt, die auf den Signalen von der Positionsbestimmungseinrichtung 72 und einer im Speicher 122 abgelegten Karte basieren, die einen für den kommenden Erntevorgang geplanten Weg definiert, oder auf Signalen von den Tastbügeln 62 oder einer Kombination aus beiden Signalen. Alternativ oder zusätzlich wird die Erntegutkante mit einer zwei- oder dreidimensionalen Kamera und einem Bildverarbeitungssystem oder einem Laser- oder Ultraschallsensor oder -scanner erfasst und zur Erzeugung des Lenksignals für die Lenkeinrichtung 114 verwendet. Der Weg der Erntemaschine 10 muss nicht unbedingt schnurgerade verlaufen, sondern kann abhängig von der Form des Felds auch Kurven umfassen. Außerdem sind Wendevorgänge am Feldende vorgesehen.

Die Vortriebsgeschwindigkeit der Erntemaschine 10 kann durch ihren Fahrer vorgegeben werden, oder die Steuereinrichtung 112 verwendet die Durchsatzsignale des Durchsatzsensors 118, um die Geschwindigkeitsvorgabeeinrichtung 116 derart anzusteuern, dass ein gewünschter Durchsatz durch die Erntemaschine 10 erzielt wird.

Außerdem wird das Transportfahrzeug 12 parallel zur Erntemaschine 10 geführt, indem die Steuereinrichtung 112 über die Rechnereinrichtung 88 und die Radioantennen 74, 78 Daten hinsichtlich der von Transportfahrzeug 10 anzusteuernden Position an die Rechnereinrichtung 102 übersendet. Die Rechnereinrichtung 102 steuert dann die Lenkeinrichtung 108 und die Geschwindigkeitsvorgabeeinrichtung 110 entsprechend an, indem sie die mit der Positionsbestimmungseinrichtung 76 erfasste Position mit der anzusteuernden Position vergleicht und abhängig vom Ergebnis des Vergleichs geeignete Lenksignale an die Lenkeinrichtung 108 gibt. Dieser Vergleich und die Erzeugung des Lenksignals für die Lenkeinrichtung 108 könnte auch durch die Rechnereinrichtung 88 und/oder die Steuereinrichtung 112 an Bord der Erntemaschine 10 erfolgen, wobei die Positionsdaten von der Positionsbestimmungseinrichtung 76 des Transportfahrzeugs über die Radioantennen 74, 78 auf die Erntemaschine 10 übertragen werden, während die Lenksignale in umgekehrter Richtung zurück auf das Transportfahrzeug 12 übersandt werden. Das Transportfahrzeug 12 folgt der Erntemaschine 10 auch beim Befahren von Kurven und beim Wenden am Feldende. Die Austrageinrichtung wird durch entsprechende Ansteuerung der Aktoren 46, 48, 52 durch die Steuereinrichtung 112 selbsttätig auf den Ladebehälter 18 ausgerichtet, wozu die Steuereinrichtung 112 Signale von der Verarbeitungsschaltung 130 und/oder von der Rechnereinrichtung 88 verwendet.

Hierbei wird der Ladezustand des Ladebehälters 18 erfasst, wozu die Signale der Verarbeitungsschaltung 130 dienen, die durch hochintegrierte Signale von Durchsatzsensor 118 und/oder Signale von einem als Nahinfrarotspektrometer ausgeführten Inhaltsstoffsensor 124 zur Erfassung von Inhaltsstoffen des Ernteguts ergänzt oder ersetzt werden können. Solange der Ladebehälter 18 nicht komplett gefüllt ist, wird geprüft, ob an der derzeit mit Erntegut beaufschlagten Stelle des Ladebehälters 18 ein gewünschter Soll-Füllstand erreicht ist. Wenn das der Fall ist, wird die Austrageinrichtung auf eine andere Stelle des Ladebehälters 18 ausgerichtet. Dabei wird eine bestimmte Ladestrategie verwendet, die den Ladebehälter 18 von vorn nach hinten oder umgekehrt füllt, wobei jeweils eine Stelle 134 mit Erntegut beaufschlagt wird, bis ein bestimmter Füllstand erreicht ist, und danach eine um eine Schrittweite nach vorn oder hinten verlagerte Stelle mit Erntegut beladen wird. Dabei kann bezüglich der seitlichen Richtung jeweils die Mitte des Ladebehälters 18 beaufschlagt werden, oder eine andere, seitlich versetzte Stelle (vgl. Bezugszeichen 134' in Figur 3, wozu mittels der Auswurfklappe 50 die Abwurfrichtung 136, 136' veränderbar ist, indem die Auswurfklappe in die Stellung 50' verbracht werden kann), oder beide werden nacheinander beaufschlagt. Die Signale der Verarbeitungseinrichtung 130 dienen demnach im Schritt 212 zum Ansteuern der Aktoren 46, 48, 52. Zusätzlich oder alternativ wird die Position des Transportfahrzeugs 12 in Vorwärtsrichtung und/oder in seitlicher Richtung gegenüber der Erntemaschine 10 variiert, indem die Steuereinrichtung 112 über die Rechnereinrichtung 88 und die Radioantennen 74, 78 entsprechende Daten hinsichtlich der von Transportfahrzeug 10 anzusteuernden Position an die Rechnereinrichtung 102 übersendet. Dadurch kann der Weg des Ernteguts zwischen dem Abgabeende der Austrageinrichtung und dem Ladebehälter 18 relativ kurz gehalten werden, was die Vorteile hat, dass bei Wind wenig Erntegutverluste entstehen und das Erntegut auf dem Ladebehälter 18 vorverdichtet wird.

Es ist anzumerken, dass in einer vereinfachten Ausführungsform der Fahrer der Erntemaschine 10 diese lenkt und ihre Geschwindigkeit vorgibt, während die Fahrer der Transportfahrzeuge 12 diese lenken und ihre Geschwindigkeiten vorgeben. Die Steuereinrichtung 112 kontrolliert dann nur die Aktoren 46, 48 und 52.

Anhand der vorhergehenden Ausführungen ist erkennbar, dass die Verarbeitungseinrichtung 130 in der Lage ist, die äußere Umrandung des Ladebehälters 18 anhand des - eine Entfernungsinformation beinhaltenden - Bildsignals der elektrooptischen Einrichtung 126 zu erkennen und die dreidimensionale Lage der Ecken des Ladebehälters 18 gegenüber der elektrooptischen Einrichtung zu erkennen. Anhand der räumlichen Lage der Ecken des Ladebehälters 18 werden die Aktoren 46, 48, 52 und ggf. 108 und 110 im Sinne einer Beladung des Ladebehälters 18 entsprechend einer vorgegebenen Ladestrategie angesteuert. Die Entfernungsinformation ist, wenn die elektrooptische Einrichtung 126 eine Stereokamera (insbesondere mit horizontaler oder vertikaler Basislinie zwischen den Kameras) ist, in den Unterschieden (Disparitäten) der Bilder der beiden Kameras enthalten. Wenn die elektrooptische Einrichtung die Entfernung direkt misst, sei es als PMD-Kamera oder als abtastender Entfernungsmesser, ist ebenfalls eine Entfernungsinformation im Bildsignal der elektrooptischen Einrichtung 126 enthalten. Zudem kann die Verarbeitungseinrichtung 130 in an sich bekannter Weise den Füllstand des Ladebehälters 18 anhand des Bildsignals der elektrooptischen Einrichtung 126 erkennen.

Die Funktionsweise der als Anordnung zur bildbasierten Erkennung der Position des Ladebehälters 18 dienenden Verarbeitungsschaltung 130 ist in der Figur 5 dargestellt. Das Bildsignal der elektrooptischen Einrichtung 126 wird einem System 138 zugeführt, das einerseits ein Disparitätsbild 140 erzeugt, andererseits eine semantische Segmentierung 142 durchführt, deren Ergebnis zur Erkennung oder Abschätzung der zweidimensionalen Position 144 der Ecken des Ladebehälters 18 dient. Anhand der Position 144 der Ecken und des Disparitätsbilds 140 (bzw. daraus abgeleiteter räumlicher Koordinaten der oberen Kanten des Ladebehälters 18) werden die dreidimensionalen Koordinaten 146 der Ecken des Ladebehälters 18 in räumlichen Koordinaten erzeugt.

Das System 138 ist ein maschinen-lernendes System und konfiguriert, Lösungen mehrerer Aufgaben gleichzeitig zu erlernen. Es erfolgt somit ein Lernvorgang (Training) anhand von Lernbildern von unterschiedlichen in der Praxis vorkommenden Ladebehältern 18 und zugehörigen Informationen hinsichtlich der Lage des Ladebehälters 18 innerhalb des Bildes. Anschließend ist das System 138 in der Lage, anhand realer Entfernungsbilder des elektrooptischen Systems 126 das Disparitätsbild 140 und die zweidimensionale Position 144 der Ecken auszugeben. Bei dem System 138 kann es sich um ein in beliebiger Hard- und Software ausgeführtes, lernfähiges System (Modell, neuronales Netzwerk o.ä.) handeln, das zuvor anhand von Lernbildern und zugehörigen Informationen hinsichtlich der Lage des Ladebehälters 18 trainiert worden ist.

Das System 138 ist somit zum so genannten Multi-Task-Learning fähig, bei dem es sich um ein Teilgebiet des maschinellen Lernens handelt, bei dem mehrere Lernaufgaben gleichzeitig gelöst werden. Das System wird somit trainiert, die mehreren Aufgaben und zugehörigen Lösungen (hier: Erzeugung des Disparitätsbilds 140 und Segmentierung 142 sowie Bestimmung der Position 144 der Ecken) gleichzeitig zu erlernen und später auszuführen. Das verringert die Größe des Systems gegenüber getrennten Systemen und die Rechenzeit, was es erlaubt, es in auf verfügbarer Hardware und in Echtzeit laufen zu lassen. Vorliegend wird das System 138, wie erwähnt, zur Berechnung des Disparitätsbilds 140 und der zweidimensionalen Position 144 der Ecken genutzt.

In den Disparitätsbildern 140 ist eine Information darüber enthalten, wie weit ein Objekt vom elektrooptischen System 126 entfernt ist. Dadurch kann hier die Entfernung des Ladebehälters 18 vom elektrooptischen System 126 erkannt werden. Anstelle beispielsweise eines an sich bekannten Block-Matching-Algorithmus (vgl. US 2019/0294914 A1 für die Erkennung von Ballen) für die Disparitätsabschätzung, der ein klassischer Bildverarbeitungsalgorithmus mit vielen Einschränkungen ist und in vielen Fällen ein unbrauchbares Disparitätsbild liefert, das zu schlechter Erkennung des Ladebehälters 18 führt, wird hier somit ein lernfähiges System 138 verwendet, das an tausenden von Lernbildern trainiert wird, um möglichst genaue Disparitätsbilder 140 zu erzeugen.

Weiterhin wird gleichzeitig mit der Erzeugung der Disparitätsbilder 140 durch das System 138 eine semantische Segmentierung der Entfernungsbilder des elektrooptischen Systems 126 gelernt und später durchgeführt. Während bisherige Systeme keine Bildinformation für die Erkennung des Ladebehälters 18 (allenfalls zur Erkennung von dessen Art, vgl. die Diskussion zum Stand der Technik) nutzen, was einen Teil der verfügbaren Information, z.B. ob ein detektiertes Objekt ein Ladebehälter 18 oder einfach ein Objekt mit rechteckiger Form ist, einfach vernachlässigt, wird dieser Nachteil gemäß der vorliegenden Erfindung dadurch vermieden, dass eine semantische Segmentierung durchgeführt wird. Hierbei werden alle Pixel in den Bildern der elektrooptischen Einrichtung 126, die in eine gemeinsame Objektkategorie gehören, markiert und gruppiert. Dieses Vorgehen kann genutzt werden, um den genauen Ort des Ladebehälters 18 im Bildfeld der elektrooptischen Einrichtung 126 (in einem zweidimensionalen Koordinatensystem, das insbesondere auf das von der elektrooptischen Einrichtung 126 gelieferte Bild bezogen ist) zu detektieren. Hierzu wird das maschinenlernende System (gleichzeitig mit dem Lernvorgang für das Disparitätsbild) mit tausenden Lernbildern und Informationen zur Objektkategorie trainiert, um die Aufgabe und Lösung der semantischen Segmentierung zu lernen.

Wenn anhand der semantischen Segmentierung 142 die zum Ladebehälter 18 gehörenden Bildteile bekannt sind, ist die Erkennung der zweidimensionalen Position 144 der Ecken des Ladebehälters 18 unproblematisch und mit geringem Rechenaufwand möglich.

Letztlich wird die im Bildsignal der elektrooptischen Einrichtung 126 erkannte Position 114 der Ecken 144 gemeinsam mit aus dem dreidimensionalen Disparitätsbild 140 abgeleiteten Informationen zur räumlichen Lage der oberen Kanten des Ladebehälters 18 verwendet, um die räumlichen Koordinaten 146 der Ecken des Ladebehälters 18 zu ermitteln und an die Steuereinrichtung 112 zu übergeben.

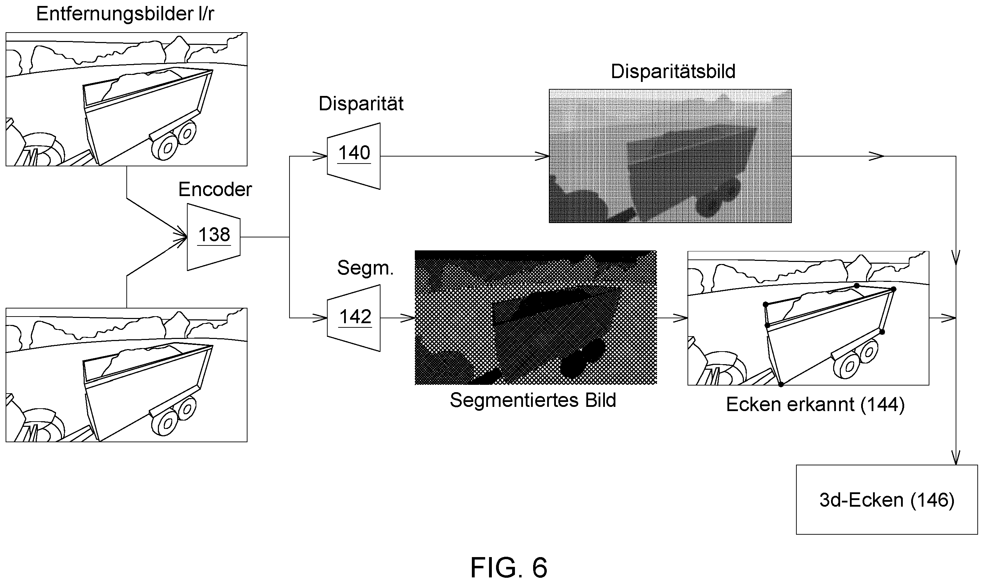

Die beschriebene Vorgehensweise ist auch der Figur 6 anhand von Beispielbildern aufgezeigt.

Die bisher beschriebene Vorgehensweise sieht vor, die Erzeugung des Disparitätsbilds 140 einerseits sowie die Segmentierung 142 und Erkennung der Ecken andererseits durch ein einziges maschinenlernendes System 138 durchzuführen, das zudem beiden Aufgaben gleichzeitig durchführt. Man könnte (in einer nicht unter die Ansprüche fallenden Variante) stattdessen auch zwei getrennte, maschinenlernende Systeme 138 für die Erzeugung des Disparitätsbilds 140 einerseits und die Segmentierung 142 verwenden. Es wäre auch denkbar, eine oder beide dieser Aufgaben (Erzeugung des Disparitätsbilds 140 einerseits sowie die Segmentierung 142 und Erkennung der Ecken andererseits) durch ein klassisches, auf algorithmische Weise vorgehendes System (vgl. den im vorletzten Absatz der Beschreibungseinleitung diskutierten Stand der Technik) durchzuführen und auf ein selbstlernendes System zu verzichten und beide Aufgaben durch auf algorithmische Weise vorgehende Systeme durchzuführen, bzw. nur eine der Aufgaben durch das selbstlernende System 138 durchzuführen und die andere durch das algorithmisch arbeitende System zu lösen. Dadurch kann bei einer schrittweisen Implementierung die beste Lösung bezüglich der Implementierung möglicher Algorithmen auf gegebener Hardware erreicht werden.

## Patentansprüche

1. Anordnung zur bildbasierten Erkennung der Position eines Ladebehälters (18), umfassend:
eine auf den Ladebehälter (18) gerichtete elektrooptische Einrichtung (126), die konfiguriert ist, ein Bildsignal bereitzustellen, das eine Entfernungsinformation beinhaltet, und
eine elektronische Auswertungseinrichtung, die signalübertragend mit der elektrooptischen Einrichtung (126) verbunden und konfiguriert ist, anhand des Bildsignals ein Entfernungsbild hinsichtlich der räumlichen Lage der Kanten des Ladebehälters (18) und eine zweidimensionale Abschätzung der Position (144) der Ecken des Ladebehälters (18) innerhalb des Bildes zu erzeugen und anhand des Entfernungsbildes und der Abschätzung ein Positionssignal hinsichtlich der räumlichen Koordinaten der Ecken des Ladebehälters (18) bereitzustellen,
wobei die elektrooptische Einrichtung (126) eine Stereokamera und das Entfernungsbild ein Disparitätsbild ist und die elektronische Auswertungseinrichtung ein zur Erzeugung des Entfernungsbilds und der Abschätzung konfiguriertes System (138) umfasst, das konfiguriert ist, eine semantische Segmentierung zur Erkennung des Ladebehälters (18) durchzuführen und die Ecken des Ladebehälters (18) im als Ladebehälter (18) identifizierten Teil des Bildes zu erkennen und anhand von Lernbildern und zugehörigen Informationen hinsichtlich der Lage des Ladebehälters (18) trainiert ist,
**dadurch gekennzeichnet, dass** das System (138) trainiert ist, die Erzeugung des Disparitätsbilds und die Segmentierung sowie die Bestimmung der Position der Ecken gleichzeitig durchzuführen.

2. Anordnung nach Anspruch 1, wobei die Auswertungseinrichtung konfiguriert ist, das Positionssignal einer Steuereinrichtung (112) zuzuführen, welche konfiguriert ist, es zur Erzeugung eines Steuersignals für einen Aktor (46, 48, 52, 108, 110) zur selbsttätigen Kontrolle eines Überladevorgangs von Material in den Ladebehälter (18) zu verwenden.

3. Fahrzeug, insbesondere Erntemaschine (10), mit Mitteln zur Aufnahme und/oder Speicherung und zur Überladung von Material in den Ladebehälter (18), mit einer Anordnung nach einem der Ansprüche 1 oder 2.

4. Verfahren zur bildbasierten Erkennung der Position eines Ladebehälters (18), mit folgenden Schritten:
Bereitstellen eines Bildsignals, das eine Entfernungsinformation beinhaltet, durch eine auf den Ladebehälter (18) gerichtete elektrooptische Einrichtung (126), und
Erzeugen eines Entfernungsbilds hinsichtlich der räumlichen Lage der Kanten des Ladebehälters (18) und einer zweidimensionalen Abschätzung der Position (144) der Ecken des Ladebehälters (18) innerhalb des Bildes durch eine elektronische Auswertungseinrichtung anhand des Bildsignals ein zu erzeugen und Bereitstellen eines Positionssignals hinsichtlich der räumlichen Koordinaten der Ecken des Ladebehälters (18) anhand des Entfernungsbildes und der Abschätzung,
wobei die elektrooptische Einrichtung (126) eine Stereokamera und das Entfernungsbild ein Disparitätsbild ist und wobei die elektronische Auswertungseinrichtung ein zur Erzeugung des Entfernungsbilds und der Abschätzung konfiguriertes System (138) umfasst, das eine semantische Segmentierung zur Erkennung des Ladebehälters (18) durchführt und die Ecken des Ladebehälters (18) im als Ladebehälter (18) identifizierten Teil des Bildes erkennt und anhand von Lernbildern und zugehörigen Informationen hinsichtlich der Lage des Ladebehälters (18) trainiert ist,
**dadurch gekennzeichnet, dass** das System (138) trainiert ist, die Erzeugung des Disparitätsbilds und die Segmentierung sowie die Bestimmung der Position der Ecken, gleichzeitig

## Claims

1. Arrangement for image-based identification of the position of a cargo container (18), comprising:
an electro-optical unit (126), which is directed on the cargo container (18) and is configured to provide an image signal containing distance information, and
an electronic evaluation unit, which is connected in a signal-transmitting manner to the electro-optical unit (126) and is configured, on the basis of the image signal, to generate a distance image with respect to the spatial location of the edges of the cargo container (18) and a two-dimensional estimation of the position (144) of the corners of the cargo container (18) within the image and to provide a position signal with respect to the spatial coordinates of the corners of the cargo container (18) on the basis of the distance image and the estimation,
wherein the electro-optical unit (126) is a stereo camera and the distance image is a disparity image and the electronic evaluation unit comprises a system (138), which is configured to generate the distance image and the estimation and which is configured to carry out a semantic segmentation for identifying the cargo container (18) and to identify the corners of the cargo container (18) in the part of the image identified as the cargo container (18) and which is trained on the basis of training images and associated information with respect to the location of the cargo container (18),
**characterized in that** the system (138) is trained to carry out the generation of the disparity image and the segmentation and the determination of the position of the corners simultaneously.

2. Arrangement according to Claim 1, wherein the evaluation unit is configured to supply the position signal to a control unit (112), which is configured to use it to generate a control signal for an actuator (46, 48, 52, 108, 110) for the automatic supervision of a transfer process of material into the cargo container (18) .

3. Vehicle, in particular harvesting machine (10), having means for picking up and/or storing and for transferring material into the cargo container (18), comprising an arrangement according to either one of Claims 1 and 2.

4. Method for image-based identification of the position of a cargo container (18), having the following steps:
providing an image signal containing distance information by way of an electro-optical unit (126) which is directed on the cargo container (18), and
generating a distance image with respect to the spatial location of the edges of the cargo container (18) and a two-dimensional estimation of the position (144) of the corners of the cargo container (18) within the image by way of an electronic evaluation unit on the basis of the image signal and providing a position signal with respect to the spatial coordinates of the corners of the cargo container (18) on the basis of the distance image and the estimation,
wherein the electro-optical unit (126) is a stereo camera and the distance image is a disparity image and wherein the electronic evaluation unit comprises a system (138), which is configured to generate the distance image and the estimation and which carries out a semantic segmentation for identifying the cargo container (18) and identifies the corners of the cargo container (18) in the part of the image identified as the cargo container (18) and which is trained on the basis of training images and associated information with respect to the location of the cargo container (18),
**characterized in that** the system (138) is trained to carry out the generation of the disparity image and the segmentation and the determination of the position of the corners simultaneously.

## Revendications

1. Arrangement de reconnaissance basée sur image de la position d'un conteneur de chargement (18), comprenant :
un dispositif électro-optique (126) dirigé vers le conteneur de chargement (18), qui est configuré pour fournir un signal d'image qui contient des informations de distance, et
un dispositif d'évaluation électronique, qui est relié signalétiquement au dispositif électro-optique (126) et est configuré pour générer, à l'aide du signal d'image, une image de distance concernant la position spatiale des bords du conteneur de chargement (18) et une estimation bidimensionnelle de la position (144) des coins du conteneur de chargement (18) à l'intérieur de l'image et pour fournir, à l'aide de l'image de distance et de l'estimation, un signal de position concernant les coordonnées spatiales des coins du conteneur de chargement (18),
le dispositif électro-optique (126) étant une caméra stéréoscopique et l'image de distance une image de disparité et le dispositif d'évaluation électronique comprenant un système (138) configuré pour générer l'image de distance et l'estimation, qui est configuré pour effectuer une segmentation sémantique en vue de reconnaître le conteneur de chargement (18) et en vue de reconnaître les coins du conteneur de chargement (18) dans la partie de l'image identifiée comme conteneur de chargement (18) et est entraîné à l'aide d'images d'apprentissage et d'informations associées concernant la position du conteneur de chargement (18),
**caractérisé en ce que** le système (138) est entraîné pour effectuer simultanément la génération de l'image de disparité et la segmentation ainsi que la détermination de la position des coins.

2. Arrangement selon la revendication 1, **caractérisé en ce que** le dispositif d'évaluation est configuré pour acheminer le signal de position à un dispositif de commande (112), lequel est configuré pour générer un signal de commande pour un actionneur (46, 48, 52, 108, 110) en vue du contrôle automatique d'un processus de transfert de matière dans le conteneur de chargement (18).

3. Véhicule, notamment moissonneuse (10), comprenant des moyens pour recevoir et/ou stocker et transférer des matières dans le conteneur de chargement (18), comprenant un arrangement selon l'une des revendications 1 ou 2.

4. Procédé de reconnaissance basée sur image de la position d'un conteneur de chargement (18), comprenant les étapes suivantes :
fourniture d'un signal d'image, qui contient des informations de distance, par un dispositif électro-optique (126) dirigé vers le conteneur de chargement (18), et
génération, à l'aide du signal d'image un à générer, d'une image de distance concernant la position spatiale des bords du conteneur de chargement (18) et d'une estimation bidimensionnelle de la position (144) des coins du conteneur de chargement (18) à l'intérieur de l'image par un dispositif d'évaluation électronique, et fourniture, à l'aide de l'image de distance et de l'estimation, d'un signal de position concernant les coordonnées spatiales des coins du conteneur de chargement (18),
le dispositif électro-optique (126) étant une caméra stéréoscopique et l'image de distance une image de disparité et le dispositif d'évaluation électronique comprenant un système (138) configuré pour générer l'image de distance et l'estimation, qui effectue une segmentation sémantique en vue de reconnaître le conteneur de chargement (18) et reconnaît les coins du conteneur de chargement (18) dans la partie de l'image identifiée comme conteneur de chargement (18) et est entraîné à l'aide d'images d'apprentissage et d'informations associées concernant la position du conteneur de chargement (18),
**caractérisé en ce que** le système (138) est entraîné pour effectuer simultanément la génération de l'image de disparité et la segmentation ainsi que la détermination de la position des coins.
